# FASCICULE DE BREVET EUROPEEN

(11) **EP 2 625 121 B1**
(45) Date de publication et mention de la délivrance du brevet: **09.07.2014**
(21) Numéro de dépôt: 11779820.7
(22) Date de dépôt: 07.10.2011
(51) Int. Cl.: B65G 1/08, B65G 47/88, B29D 30/00, B65G 1/04

(54) **MAGASIN DE STOCKAGE D'ENVELOPPES DE PNEUMATIQUE**
LAGER FÜR REIFENKARKASSEN
STORE FOR TYRE CASINGS

(30) Priorité: 08.10.2010 FR 1058191
(43) Date de publication de la demande: 14.08.2013
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: MARTI, Francis, F-63040 Clermont-Ferrand Cedex 9 (FR)
(74) Mandataire: Noel, Luminita
(86) Numéro de dépôt international: PCT/FR2011/052350
(87) Numéro de publication internationale: WO 2012/045987

(56) Documents cités:
- EP-A2- 0 795 495
- DE-U1- 20 214 339
- FR-A- 1 346 407
- US-A- 3 664 534
- US-A- 3 753 507

## Description

L'invention concerne la fabrication des pneumatiques de véhicule et en particulier le stockage et la manutention des enveloppes de pneumatique.

La fabrication des pneumatiques donne lieu à la réalisation d'une ébauche comprenant notamment de la gomme crue. L'ébauche subit une étape de cuisson pour la vulcanisation de la gomme. Après cuisson, il est fréquent que les enveloppes ainsi réalisées doivent être stockées temporairement, par exemple en vue d'être regroupées par modèle ou par série pour expédition chez le client. En effet, une même usine réalise généralement des modèles de pneumatiques différents. Et il peut arriver que soient cuits au cours d'une même période des pneumatiques qui ne font pas partie d'une même série et d'un même modèle. Il est donc nécessaire de les stocker temporairement avant de les rassembler pour expédition.

Le stockage a lieu par exemple dans des magasins comprenant des couloirs inclinés. Un convoyeur d'entrée place une enveloppe dans l'un des couloirs. Celle-ci se déplace alors par gravité le long du couloir jusqu'à venir en appui contre une butée d'une extrémité de sortie du couloir ou contre les enveloppes déjà accumulées. Pour sortir une enveloppe du magasin, un convoyeur de sortie vient en regard du couloir concerné. Un mécanisme du couloir soulève l'enveloppe pour lui faire franchir la butée puis l'enveloppe est transférée sur le convoyeur. En variante, on peut prévoir que la butée est montée mobile entre une position active et une position escamotée et manoeuvrée par un mécanisme du couloir. Un tel magasin est connu de US 3,753,507 A1 qui décrit le préambule de la revendication 1. Mais dans un cas comme dans l'autre, ces mécanismes situés aux extrémités des couloirs respectifs sont coûteux.

Un but de l'invention est de réduire le coût du stockage des enveloppes de pneumatique.

A cet effet, on prévoit selon l'invention un magasin de stockage d'enveloppes de pneumatique de véhicule, qui comprend ;
- au moins deux couloirs de stockage d'enveloppes, présentant chacun une butée rectiligne, interceptant un plan vertical médian du couloir, présentant deux extrémités longitudinales et ininterrompue de l'une à l'autre des extrémités, et
- un convoyeur d'enveloppe, apte à venir en regard de l'un quelconque des couloirs et comprenant une nacelle apte à recevoir une enveloppe et des moyens pour soulever une enveloppe qui se trouve dans le couloir jusqu'à une hauteur supérieure à celle de la butée, les moyens comprenant un rouleau monté mobile suivant la direction verticale par rapport à la nacelle.

Ainsi, la butée rend le magasin particulièrement bien adapté pour le stockage des enveloppes de pneumatique. En effet, quelle que soit la largeur de l'enveloppe qui est à symétrie de révolution, la butée lui fournit un appui à un point situé au voisinage du plan vertical médian du couloir ou sur ce dernier. Cette position reste sensiblement constante même si on stocke dans les couloirs des enveloppes de dimensions différentes. On facilite ainsi l'extraction des enveloppes par le convoyeur. Si au contraire la butée était interrompue dans sa portion médiane, l'enveloppe risquerait de se coincer dans la lumière ainsi ménagée, coincement qui surviendrait soit lors du stockage, soit lors de l'extraction.

De plus, c'est le convoyeur lui-même qui soulève l'enveloppe qui se trouve dans le couloir jusqu'à une hauteur supérieure à celle de la butée. Ce mécanisme unique du convoyeur remplace donc tous les mécanismes propres à chaque couloir, ce qui permet de réduire grandement les coûts. De plus, le rouleau permet de soulever facilement et efficacement chaque enveloppe pour lui faire franchir la butée sans risquer de l'abimer. En outre, le rouleau étant mobile suivant la direction verticale par rapport à la nacelle, il n'est pas nécessaire de manoeuvrer cette dernière pour faire franchir la butée au rouleau. Cela est avantageux car une telle manoeuvre de la nacelle s'avère relativement malaisée et consomme une grande quantité d'énergie.

Avantageusement, le rouleau est monté mobile en translation par rapport à la nacelle.

On peut prévoir que le rouleau est monté mobile par rapport à la nacelle de façon à traverser une ouverture ménagée dans chaque couloir.

Ainsi, le rouleau est apte à contourner la butée en passant dessous pour traverser l'ouverture ménagée dans la surface de réception du couloir supportant les enveloppes.

Avantageusement, le rouleau est relié à la nacelle par un montage en parallélogramme.

Il s'agit d'un montage assurant un guidage simple et précis du rouleau par rapport au couloir et au convoyeur.

De préférence, le montage définit deux extrémités de la course du rouleau et s'étend tout entier sous un plan de chargement de la nacelle quelle que soit la position du rouleau.

Ainsi, le montage en parallélogramme laisse dégagé le plan de chargement de la nacelle qui demeure donc libre pour recevoir des enveloppes de diverses dimensions, en particulier de grand diamètre. On peut notamment charger sur la nacelle une enveloppe de plus grandes dimensions que la nacelle et donner à cette dernière une largeur inférieure à celle des couloirs.

On peut prévoir que le magasin comprend des moyens pour déplacer le rouleau par rapport à la nacelle.

Avantageusement, les moyens pour soulever l'enveloppe comprennent un support, le rouleau étant monté rotatif par rapport au support.

On peut prévoir que le magasin comprend des moyens pour mettre le rouleau en rotation par rapport au support.

Ainsi, le rouleau qui sert à soulever l'enveloppe peut aussi la transférer depuis le couloir jusqu'au convoyeur.

De préférence, le rouleau présente une longueur supérieure à la moitié d'une largeur disponible dans le couloir pour les enveloppes.

Le rouleau supporte donc une grande partie de la largeur de l'enveloppe en vue de la maintenir de façon stable pendant qu'il la soulève, voire la transfère sur la nacelle. De plus, si le diamètre de l'enveloppe est très inférieur à la largeur du couloir, le rouleau peut convenablement soulever et transférer l'enveloppe même si cette dernière est décalée par rapport au plan médian du couloir.

Avantageusement, la butée s'étend sur plus de la moitié d'une largeur disponible dans le couloir pour les enveloppes.

Une telle butée permet de stocker dans le couloir des enveloppes dont le diamètre est très inférieur à cette largeur.

Avantageusement, le magasin comprend un deuxième convoyeur d'enveloppe, apte à venir en regard d'une extrémité de l'un quelconque des couloirs opposée à la butée.

On prévoit également selon l'invention un procédé de manutention d'enveloppes de pneumatique de véhicule dans un magasin selon l'invention, dans lequel :
- on déplace un convoyeur d'enveloppe jusqu'à un couloir de stockage d'enveloppes, et
- le convoyeur soulève une enveloppe qui se trouve dans le couloir jusqu'à une hauteur supérieure à celle d'une butée du couloir.

De préférence, le convoyeur transfère l'enveloppe sur le convoyeur.

D'autres caractéristiques et avantages de l'invention apparaîtront encore dans la description suivante d'un mode de réalisation donné à titre d'exemple non limitatif en référence aux dessins annexés sur lesquels :
- la figure 1 est une vue en coupe verticale d'un magasin de stockage d'enveloppes de pneumatique de roue de véhicule selon l'invention ;
- les figures 2 à 4 sont trois vues à grande échelle de l'extrémité basse d'un couloir et du convoyeur de sortie du magasin de la figure 1, montrant trois étapes de mise en oeuvre du procédé selon l'invention ; et
- la figure 5 est une vue en plan de la partie du magasin des figures 2 et 4.

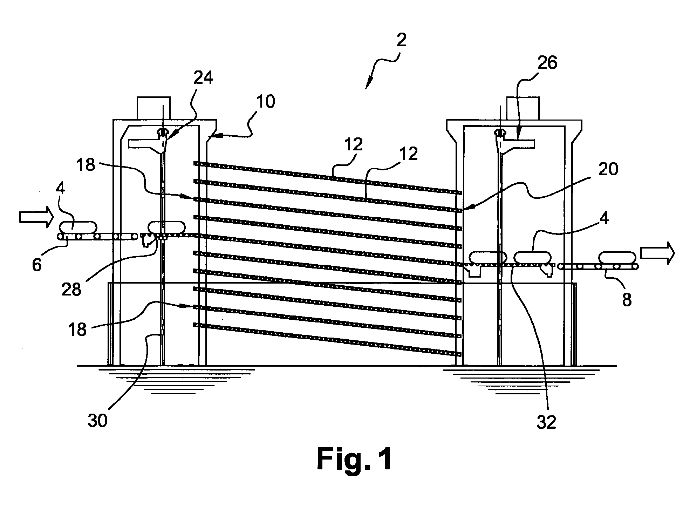

On a illustré à la figure 1 un magasin 2 de stockage d'enveloppes 4 de pneumatique de roue de véhicule.

Les véhicules en question peuvent être des véhicules de tourisme, des véhicules utilitaires, des véhicules de type léger, des véhicules de type poids lourds ou encore des engins de génie civil.

Les enveloppes 4 forment des pneumatiques achevés ou quasi achevés. Elles comprennent de la gomme vulcanisée, des armatures et différents adjuvants. Elles ont une forme générale toroïdale qui est celle du pneumatique. Le magasin 2 est interposé entre un tapis roulant d'entrée 6 au moyen duquel les enveloppes 4 sont amenées au magasin et un tapis roulant de sortie 8 au moyen duquel les enveloppes sont emportées à partir du magasin. Ces deux tapis ont des bâtis fixes par rapport à un bâti 10 du magasin 2.

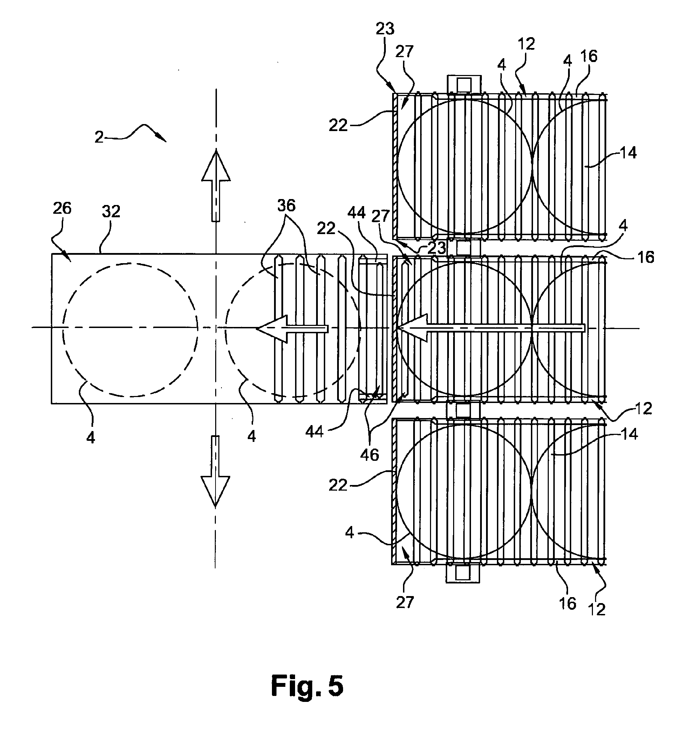

Le magasin 2 comprend un groupe de couloirs identiques 12 disposés les uns au-dessus des autres et les uns à côté des autres pour former entre eux des colonnes verticales, par exemple au nombre de dix, et des rangées horizontales, par exemple au nombre de dix également. Les nombre de colonnes et de rangées ne sont pas limitatifs. Sur la figure en coupe de la figure 1, on aperçoit seulement une colonne de ces couloirs, les autres se trouvant en-deçà et au-delà du plan de la figure. La figure 5 illustre trois couloirs contigus 12 s'étendant dans la même rangée horizontale.

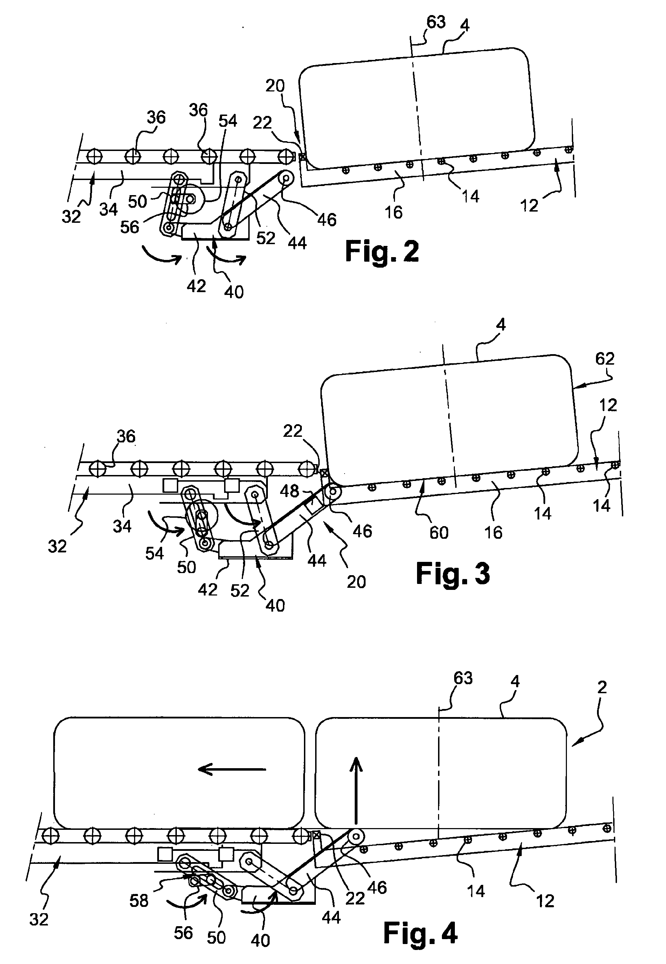

Chaque couloir 12 comprend un support plan allongé, défini par des rouleaux 14 illustrés aux figures 2 à 5, identiques entre eux, alignés à la suite les uns des autres et dont les axes de rotation sont coplanaires. Les rouleaux sont montés librement mobiles (montés fous) en rotation par rapport à un bâti commun 16 du couloir comprenant deux longerons portant les rouleaux.

Chaque couloir est incliné de sorte que sa direction longitudinale forme un angle avec la direction horizontale. Chaque couloir présente donc une extrémité haute 18, illustrée à gauche sur la figure 1, et une extrémité basse 20, illustrée à droite. Tous les couloirs présentent la même inclinaison. De plus, les extrémités hautes des couloirs s'étendent dans un même plan vertical. Il en est de même pour leurs extrémités basses 20. Il s'agit de couloirs gravitaires.

Chaque couloir porte à son extrémité basse 20 une butée 22 s'étendant en saillie du plan défini par les rouleaux 14 pour la réception d'une enveloppe 4, vers le haut, précisément suivant une direction perpendiculaire à ce plan de support.

Comme on le voit sur la figure 5, la butée 22 a une forme allongée rectiligne suivant la direction horizontale. C'est donc sur toute sa longueur qu'elle s'étend plus haut que les rouleaux 14. La butée présente deux extrémités horizontales 23 entre lesquelles elle est ininterrompue. Elle s'étend symétriquement de part et d'autre du plan vertical médian du couloir qu'elle intercepte et qui forme le plan de symétrie de ce dernier. Elle occupe donc notamment la partie médiane de l'extrémité du couloir. La butée a une longueur supérieure à la moitié de la largeur de couloir disponible pour les enveloppes. Ici, cette longueur dépasse même les trois quarts de cette largeur et même celle-ci puisque la longueur de la butée est égale à la largeur totale du couloir.

Le magasin 2 présente un convoyeur d'entrée 24 et un convoyeur de sortie 26, interposés respectivement entre le tapis d'arrivée 6 et les couloirs 12, et ces derniers et le tapis de sortie 8.

Le convoyeur d'entrée 24 comprend une nacelle 28 montée mobile par rapport au bâti 10 à coulissement suivant la direction verticale et à coulissement suivant la direction horizontale parallèle au plan des extrémités hautes. Le magasin comporte des moyens de motorisation de la nacelle pour son déplacement par rapport au bâti. La nacelle peut donc se déplacer pour venir en regard de l'extrémité du tapis 6 et en regard de l'extrémité haute 18 de l'un quelconque des couloirs 12. Dans le présent exemple, le convoyeur 24 comprend un mât vertical 30 sur lequel la nacelle 28 est montée mobile à coulissement, le mât étant par ailleurs monté déplaçable suivant la direction horizontale par rapport au bâti 10.

Le convoyeur de sortie 26 comprend une nacelle 32 montée mobile par rapport au bâti et motorisée de façon analogue. Elle peut donc être placée à volonté en regard du tapis de sortie 8 ou de l'extrémité basse 20 de l'un quelconque des couloirs 12.

En référence aux figures 2 à 4, la nacelle du convoyeur de sortie 32 comprend un bâti 34 et des rouleaux 36 identiques entre eux montés librement mobiles à rotation par rapport au bâti 34, de sorte que les rouleaux définissent une surface plane horizontale de réception d'une enveloppe 4.

La nacelle 32 comprend un support 40 formé en l'espèce par un chariot d'une seule pièce présentant une base 42 et deux bras identiques 44 s'étendant l'un derrière l'autre sur les figures 2 à 4, chacun dans un plan vertical en étant incliné par rapport à la direction verticale. Les deux bras 44 sont parallèles l'un à l'autre. Les bras sont reliés rigidement au chariot 40 par leur extrémité inférieure et portent à leur extrémité supérieure un rouleau 46 monté rotatif autour d'un axe horizontal par rapport aux bras. Le chariot 40 comporte en outre un moteur 48 apte à mettre en rotation le rouleau 46.

Le chariot 40 est relié au bâti 34 au moyen d'un montage en parallélogramme comprenant ainsi de chaque côté du chariot deux biellettes 50 et 52 parallèles l'une à l'autre, soit quatre biellettes en tout dont les axes de rotation sont horizontaux et tous parallèles. L'extrémité supérieure de chaque biellette est articulée au bâti 34 tandis que son extrémité inférieure est articulée au chariot. L'équipage formé par le chariot et les bras portant le rouleau est donc mobile à translation par rapport au bâti 34 de la nacelle, notamment suivant la direction verticale. La trajectoire de ce mouvement est circulaire et inscrite dans un plan vertical.

Le chariot est mobile entre une position rétractée ou position initiale illustrée aux figures 2 et 5, dans laquelle il s'étend tout entier sous la nacelle 32, le rouleau 46 s'étendant au droit du rouleau 36 formant l'extrémité de la nacelle, et une position finale ou position étendue illustrée aux figures 4 et 5 dans laquelle le chariot a été déplacé vers la droite sur les figures par rapport à la position initiale et le rouleau 46 s'étend dans le prolongement des rouleaux 36, au-delà de celui qui forme l'extrémité de la nacelle. Le rouleau 46 prolonge alors le plan de support d'enveloppe de la nacelle.

Le rouleau 46 a une longueur supérieure à la moitié de la largeur du couloir disponible pour les enveloppes. Ici, cette longueur dépasse les trois quarts de cette largeur et même 90% de celle-ci. Elle est toutefois inférieure à cette largeur pour permettre au rouleau de pénétrer dans le couloir par en-dessous comme expliqué plus loin.

Le convoyeur comprend un moteur 54 dont le carter est fixé rigidement au bâti 34 et qui porte sur son arbre, montée mobile autour d'un axe horizontal, une biellette 56 perpendiculaire à cet axe et portant un galet reçu à coulissement dans une gorge rectiligne 58 de la biellette 50 qui la traverse de part en part suivant la direction horizontale et s'étend parallèlement à la direction longitudinale de la biellette. La rotation de l'arbre du moteur, décentré par rapport aux axes de la biellette, fait donc que le galet sollicite cette dernière dans sa gorge 58 pour la faire tourner, ce qui déplace le chariot 40 de l'une à l'autre de ses positions.

Le magasin 2 est utilisé comme suit, notamment pour la mise en oeuvre du procédé de l'invention.

Après la cuisson des ébauches de pneumatique 4, celles-ci sont amenées par le tapis 6 jusqu'au magasin 2. Les enveloppes reposent sur le tapis par un flanc 60 du pneumatique. Le convoyeur d'entrée 28 réceptionne une de ces enveloppes sur sa nacelle puis se déplace jusqu'à l'extrémité haute de son couloir de destination 12. Des moyens adaptés non détaillés transfèrent alors l'enveloppe 4 sur le couloir 12.

Par gravité, en roulant sur les rouleaux 14, l'enveloppe, reposant toujours sur son flanc, descend en parcourant tout ou partie de la longueur du couloir jusqu'à venir en appui soit contre la butée 22 de l'extrémité basse, soit contre les enveloppes déjà accumulées en partie basse du couloir. Les enveloppes arrivant par le tapis 6 sont donc ainsi stockées successivement dans leur couloir de destination. On effectue à cette occasion un classement des enveloppes qui sont regroupées par modèle et/ou par série dans les couloirs correspondants. L'axe 63 de l'enveloppe est incliné par rapport à la direction verticale, compte tenu de l'inclinaison du couloir.

Lorsqu'on souhaite extraire l'une de ces enveloppes en vue de l'expédier chez un client, le convoyeur de sortie 32 se déplace jusqu'à l'extrémité basse 20 du couloir où se trouve l'enveloppe 4. Le chariot 40 est initialement en position rétractée comme illustré à la figure 2 de sorte qu'il ne gène pas le mouvement du convoyeur 32 en regard des couloirs. Le convoyeur est placé dans une position telle que le plan défini par les rouleaux 36 est très légèrement plus haut que le sommet de la butée 22.

On commande ensuite la mise en rotation du rouleau 46 au moyen du moteur 48 et la rotation du moteur 54. Ce dernier fait passer le chariot 40 de la position initiale à la position intermédiaire illustrée à la figure 3 dans laquelle le rouleau 46 est sur le point de venir en contact avec l'enveloppe 4. Ce contact s'effectue par exemple contre le flanc 60 sur lequel l'enveloppe repose ou bien à la jonction de ce flanc avec la bande de roulement 62.

Le passage de l'une à l'autre des positions a lieu pour le rouleau, comme pour le support, au moyen d'un mouvement de translation suivant une trajectoire circulaire inscrite dans un plan vertical, le centre de l'arc de cercle se trouvant au-dessus de la trajectoire. Au cours de ce mouvement, le rouleau 46 contourne par le dessous la butée 22 et pénètre de bas en haut dans une ouverture traversante 27 ménagée près de l'extrémité basse du couloir 12 pour permettre la mise en contact du rouleau 46 avec l'enveloppe 4 reposant encore dans le couloir. Cette ouverture est ménagée dans le plan de chargement du couloir et délimitée vers l'avant par la butée 22 et vers l'arrière par le premier rouleau 14 du couloir suivant la butée. L'écartement entre les bras 44 est suffisamment petit par rapport à l'écartement entre les longerons du bâti 16 portant les rouleaux 14 pour permettre le passage des bras et du rouleau 46 à travers cette ouverture.

On pourrait néanmoins prévoir en variante que le rouleau 26 pénètre dans une ouverture du couloir ménagée entre deux de ses rouleaux 14 de sorte que cette ouverture n'est pas contiguë à la butée 22.

Au cours de la suite du mouvement, le chariot passe de la position intermédiaire de la figure 3 à la position finale de la figure 4. Il soulève ainsi l'extrémité basse de l'enveloppe 4 jusqu'à une hauteur supérieure à celle de la butée 22, comme on le voit sur la figure 4. Il s'agit ici d'une rotation de l'enveloppe autour d'un axe horizontal. L'enveloppe 4 s'étend alors par exemple avec son axe 63 vertical et non plus incliné par rapport à la direction verticale comme c'était le cas durant son stockage dans le couloir.

Cette suite du mouvement du rouleau et du support a lieu moyennant la poursuite de la translation précitée suivant la trajectoire circulaire. Les bras 44 pénètrent plus haut dans l'ouverture pour permettre au rouleau 46 de soulever l'enveloppe.

On interrompt ensuite ce mouvement.

La rotation du rouleau 46 qui supporte maintenant en partie l'enveloppe 4 entraine ensuite son transfert par coulissement sur la nacelle 32 de sorte que l'enveloppe quitte le couloir.

Le convoyeur 32 se déplace ensuite jusqu'au tapis de sortie 8 sur lequel l'enveloppe 4 est déchargée grâce à des moyens adaptés.

Les enveloppes peuvent ensuite subir une étape de contrôle de qualité si celle-ci n'a pas déjà eu lieu avant le stockage dans le magasin. Les enveloppes sont regroupées par série et/ou par modèle pour être expédiées chez un client.

Les extrémités de la course du rouleau 46 par rapport à la nacelle correspondent aux positions des figures 2 et 4. Le montage en parallélogramme est agencé de sorte que, quelle que soit la position du rouleau sur cette course, les biellettes 50 et 52 et le support 40 s'étendent plus bas que le plan de chargement de la nacelle, laissant ainsi ce dernier toujours dégagé.

On observe que le magasin est organisé de telle sorte qu'une enveloppe introduite en premier dans un couloir donné est nécessairement celle qui en sort en premier. Il s'agit donc d'un stockage de type « premier entré - premier sorti ». Un tel magasin permet de faire sortir les enveloppes 4 dans un ordre différent de leur ordre d'arrivée.

Dans cet exemple, la nacelle a des dimensions lui permettant de recevoir deux enveloppes l'une derrière l'autre.

Le magasin est notamment adapté aux enveloppes de pneumatique de véhicule de tourisme présentant un diamètre compris entre 550 et 800 mm.

Bien entendu, on pourra apporter à l'invention de nombreuses modifications sans sortir du cadre de celle-ci, telle qu'elle est définie dans les revendications.

## Revendications

1. Magasin (2) de stockage d'enveloppes (4) de pneumatique de véhicule, qui comprend :
- au moins deux couloirs (12) de stockage d'enveloppes, présentant chacun une butée rectiligne (22) interceptant un plan vertical médian du couloir, et
- un convoyeur (26) d'enveloppe,
**caractérisé en ce que** :
- chaque butée présente deux extrémités longitudinales (23) et est ininterrompue de l'une à l'autre des extrémités, et
- le convoyeur (26) est apte à venir en regard de l'un quelconque des couloirs et comprend une nacelle (32) apte à recevoir une enveloppe et des moyens (40) pour soulever une enveloppe qui se trouve dans le couloir jusqu'à une hauteur supérieure à celle de la butée, les moyens comprenant un rouleau (46) monté mobile suivant la direction verticale par rapport à la nacelle.

2. Magasin selon la revendication précédente dans lequel le rouleau (46) est monté mobile en translation par rapport à la nacelle (32).

3. Magasin selon au moins l'une quelconque des revendications précédentes dans lequel le rouleau (46) est monté mobile par rapport à la nacelle (32) de façon à traverser une ouverture (27) ménagée dans chaque couloir.

4. Magasin selon au moins l'une quelconque des revendications précédentes dans lequel le rouleau (46) est relié à la nacelle par un montage en parallélogramme.

5. Magasin selon la revendication précédente dans lequel le montage définit deux extrémités de la course du rouleau (46) et s'étend tout entier sous un plan de chargement de la nacelle quelle que soit la position du rouleau.

6. Magasin selon au moins l'une quelconque des revendications précédentes qui comprend des moyens (54) pour déplacer le rouleau par rapport à la nacelle.

7. Magasin selon au moins l'une quelconque des revendications précédentes dans lequel les moyens pour soulever l'enveloppe comprennent un support (42), le rouleau (46) étant monté rotatif par rapport au support.

8. Magasin selon la revendication précédente, qui comprend des moyens (48) pour mettre le rouleau (46) en rotation par rapport au support.

9. Magasin selon au moins l'une quelconque des revendications précédentes dans lequel le rouleau (46) présente une longueur supérieure à la moitié d'une largeur disponible dans le couloir pour les enveloppes.

10. Magasin selon au moins l'une quelconque des revendications précédentes dans lequel la butée (22) s'étend sur plus de la moitié d'une largeur disponible dans le couloir pour les enveloppes.

11. Magasin selon au moins l'une quelconque des revendications précédentes dans lequel chaque couloir (12) est incliné de sorte qu'une enveloppe (4) reçue dans l'un des couloirs tend à se déplacer jusqu'à la butée.

12. Magasin selon au moins l'une quelconque des revendications précédentes qui comprend un deuxième convoyeur (28) d'enveloppe, apte à venir en regard d'une extrémité de l'un quelconque des couloirs opposée à la butée.

13. Procédé de manutention d'enveloppes (4) de pneumatique de véhicule dans un magasin (2) selon l'une des revendications 1 à 12 comprenant les suivantes:
- on déplace le convoyeur (26) jusqu'à un couloir (12) de stockage d'enveloppes, et
- le convoyeur (26) soulève une enveloppe (4) qui se trouve dans le couloir jusqu'à une hauteur supérieure à celle de la butée (22) du couloir.

14. Procédé selon la revendication précédente dans lequel le convoyeur (26) transfère l'enveloppe (4) sur le convoyeur.

## Patentansprüche

1. Lager (2) für Fahrzeugreifenkarkassen (4), das Folgendes aufweist:
- mindestens zwei Karkassenlagergänge (12), die jeweils einen geradlinigen Anschlag (22) aufweisen, der eine vertikale mittlere Ebene des Gangs kreuzt, und
- ein Karkassenförderband (26),
**dadurch gekennzeichnet dass**:
- jeder Anschlag zwei Längsenden (23) aufweist und von dem einen Ende zu dem anderen ununterbrochen ist, und
- das Förderband (26) geeignet ist, um sich einem beliebigen der Gänge gegenüber zu stellen, und eine Gondel (32) aufweist, die geeignet ist, um eine Karkasse aufzunehmen, und Mittel (40) zum Heben einer Karkasse, die sich in dem Gang befindet, bis zu einer Höhe, die größer als diejenige des Anschlags, wobei die Mittel eine Walze (46) aufweisen, die entlang der vertikalen Richtung in Bezug auf die Gondel beweglich installiert ist.

2. Lager nach dem vorhergehenden Anspruch, bei dem die Walze (46) in Verschiebung in Bezug auf die Gondel (32) beweglich installiert ist.

3. Lager nach wenigstens einem der vorhergehenden Ansprüche, bei dem die Walze (46) in Bezug auf die Gondel (32) derart beweglich installiert ist, dass sie eine Öffnung (27), die in jedem Gang eingerichtet ist, durchquert.

4. Lager nach wenigstens einem der vorhergehenden Ansprüche, bei dem die Walze (46) mit der Gondel durch eine Parallelogrammmontage verbunden ist.

5. Lager nach dem vorhergehenden Anspruch, bei dem die Montage zwei Enden des Hubs der Walze (46) definiert und sich vollständig unter einer Ladeebene der Gondel ungeachtet der Position der Walze erstreckt.

6. Lager nach wenigstens einem der vorhergehenden Ansprüche, das Mittel (54) zum Verlagern der Walze in Bezug auf die Gondel aufweist.

7. Lager nach wenigstens einem der vorhergehenden Ansprüche, bei dem die Mittel zum Heben der Karkasse einen Träger (42) aufweisen, wobei die Walze (46) in Bezug auf den Träger drehend installiert ist.

8. Lager nach dem vorhergehenden Anspruch, das Mittel (48) aufweist, um die Walze (46) in Bezug auf den Träger in Drehung zu versetzen.

9. Lager nach wenigstens einem der vorhergehenden Ansprüche, bei dem die Walze (46) eine Länge aufweist, die größer ist als die Hälfte einer in dem Gang für die Karkassen verfügbaren Breite.

10. Lager nach wenigstens einem der vorhergehenden Ansprüche, bei dem sich der Anschlag (22) über mehr als die Hälfte einer Breite, die in dem Gang für die Karkassen verfügbar ist, erstreckt.

11. Lager nach wenigstens einem der vorhergehenden Ansprüche, in dem jeder Gang (12) derart geneigt ist, dass eine Karkasse (4), die in einem der Gänge empfangen wird, dazu tendiert, sich bis zu dem Anschlag zu bewegen.

12. Lager nach wenigstens einem der vorhergehenden Ansprüche, das ein zweites Karkassenförderband (28) aufweist, das geeignet ist, um sich einem Ende eines beliebigen der Gänge, die dem Anschlag gegenüberliegen, gegenüber zu stellen.

13. Förderverfahren von Fahrzeugreifenkarkassen (4) in einem Lager (2) nach einem der Ansprüche 1 bis 12, das die folgenden Schritte aufweist:
- man verlagert das Karkassenförderband (26) bis zu einem Karkassenlagergang (12) und
- das Förderband (26) hebt eine Karkasse (4), die sich in dem Gang befindet, bis zu einer Höhe, die größer ist als die des Anschlags (22) des Gangs.

14. Verfahren nach dem vorhergehenden Anspruch, bei dem das Förderband (26) die Karkasse (4) auf das Förderband transferiert.

## Claims

1. Store (2) for vehicle tyre casings (4), which contains:
- at least two channels (12) for storing casings, each having a rectilinear end stop (22), intercepting a median vertical plane of the channel, and
- a casing conveyor (26),
**characterised in that**
- each end stop exhibits two longitudinal extremities (23) and is uninterrupted from one to the other of the extremities, and
- the conveyor (26) is capable of coming into alignment with any of the channels and contains a platform (32) capable of receiving a casing and means (40) for lifting a casing that is located in the channel to a height greater than that of the end stop, the means containing a roller (46) which is mounted movably in the vertical direction in relation to the platform.

2. Store according to the preceding claim, in which the roller (46) is movably mounted in translation in relation to the platform (32).

3. Store according to at least one of the preceding claims, in which the roller (46) is movably mounted in relation to the platform (32) in such a way as to pass through an opening (27) arranged in each channel.

4. Store according to at least one of the preceding claims, in which the roller (46) is connected to the platform by a parallelogram mounting.

5. Store according to the preceding claim, in which the mounting defines two extremities of the travel of the roller (46) and extends in its entirety beneath a loading plane of the platform regardless of the position of the roller.

6. Store according to at least one of the preceding claims, which contains means (54) for displacing the roller in relation to the platform.

7. Store according to at least one of the preceding claims, in which the means for lifting the casing contain a support (42), the roller (46) being rotatably mounted in relation to the support.

8. Store according to the preceding claim, which contains means (48) for setting the roller (46) in rotation in relation to the support.

9. Store according to at least one of the preceding claims, in which the roller (46) exhibits a length greater than half the width available in the channel for the casings.

10. Store according to at least one of the preceding claims, in which the end stop (22) extends for more than half the width available in the channel for the casings.

11. Store according to at least one of the preceding claims, in which each channel (12) is inclined in such a way that a casing (4) received in one of the channels tends to move as far as the end stop.

12. Store according to at least one of the preceding claims, which contains a second casing conveyor (28), adapted to come into alignment with an extremity of any of the channels opposite the end stop.

13. Method for handling vehicle tyre casings (4) in a store (2) according to one of the claims 1 to 12, comprising the following steps:
- the casing conveyor (26) is displaced as far as a channel (12) for storing casings, and
- the conveyor (26) lifts a casing (4) that is present in the channel to a height greater than that of the end stop (22) of the channel.

14. Method according to the preceding claim, in which the conveyor (26) transfers the casing (4) onto the conveyor.
